Europäisches Patentamt

European Patent Office

Office européen des brevets

(11) Publication number: **0 142 244**

A1

(12) # EUROPEAN PATENT APPLICATION

(21) Application number: **84306295.1**

(22) Date of filing: **14.09.84**

(51) Int. Cl.⁴: **H 04 N 5/46**

(30) Priority: **15.09.83 GB 8324695**

(43) Date of publication of application:
**22.05.85 Bulletin 85/21**

(84) Designated Contracting States:
**AT BE CH DE FR IT LI LU NL SE**

(71) Applicant: **SINCLAIR RESEARCH LIMITED**
**25 Willis Road**
**Cambridge CB1 2AQ(GB)**

(72) Inventor: **Hoodless, Adrian Harry William**
**Dibden Moor End Road**
**Radwell Bedford. MK43 7HY(GB)**

(72) Inventor: **Mallinson, Andrew Martin**
**5 Nowell Court**
**Salem New Hampshire 03079(US)**

(74) Representative: **Pike, Harold John et al,**
**Abel & Imray Northumberland House 303-306 High**
**Holborn**
**London, WC1V 7LH(GB)**

(54) Television receivers.

(57) A multistandard television receiver has a circuit respon-
sive to the number of lines per field in a received signal to
produce an output for setting other circuits of the receiver to
suit the sound sub-carrier frequency, the field frequency and
video signal bandwidth of the received signal on the basis of
values of these variables in different television signal stan-
dards, the frequency of a sound channel local oscillator is
substantially equal to that of a picture element frequency
oscillator from which pulses are applied to a line counter. The
frequencies of the oscillators are both controlled by a single
phase locked loop in response to received line synchronising
pulses. The response of the sound channel local oscillator to
the phase locked loop is slugged to eliminate frequency
changes which might otherwise be audible.

FIG.2a.

./...

FIG. 2b.

- 1 -

TELEVISION RECEIVERS

This invention relates to television receivers.

Small, portable, battery-operated television receivers have been manufactured in the past but only recently has it become practicable to construct such receivers which are sufficiently small to be carried in a pocket, with the production of flat, cathode ray display tubes and other compact display devices. A disadvantage with a portable, battery-operated television receiver is that large batteries are heavy and are consequently undesirable, and lighter, smaller batteries do not have a large capacity, so that they have a short useful life and have to be replaced frequently, with an attendant cost penalty. It is therefore essential in such a receiver to keep the current consumption as low as possible. Partly for this reason and partly because of limitations of space it is desirable to include as many of the circuits of the receiver as conveniently possible in a single integrated circuit or possibly a few integrated circuits. A difficulty in the use of integrated circuits for processing signal waveforms such as are employed in television receivers arises because of the variations in the characteristics and the non-ideal behaviour of the elements of the circuits which need correction and/or compensation for acceptable performance.

Another problem with battery operated receivers is that the voltage produced by the battery falls during its useful life, so that regulation of the voltage is desirable for maintaining the required relationships between the various signals employed in producing the display, which otherwise could become distorted. Such regulation is, however, undesirable because of the power which it consumes.

A small portable television receiver may of course be taken from country to country and could usefully be capable of receiving television signals according to different standards.

It is therefore an object of the present invention to overcome one or more of the difficulties outlined above. It should, nevertheless, be borne in mind that the invention is applicable to any type of television receiver and not merely to portable battery operated ones.

According to the present invention there is provided a television receiver which is capable of multistandard reception by being arranged to respond to a number of lines per field of frame of a received television signal to provide internal signal processing appropriate to the video and audio components of that television signal.

The receiver may include means for producing a representation of the number of lines in the received signal and comparing the number with the times of reception of the field of frame sync signal. It is envisaged that the receiver be at least capable of handling television signals with 525 and 625 lines per frame, these numbers being appropriate to the standards of American broadcast and European and UK broadcasts.

The signal representing the number of lines per field or frame of the received signal may be applied to an oscillator emitting pulses at a picture element frequency to a line counter for counting these pulses to produce signals at the line frequency of the received signal and to a field counter counting the lines. A local oscillator for the sound channel may be arranged to oscillate at the same frequency as the line oscillator because the sound channel separation is commensurate with the video signal bandwidth. The line oscillator may be controlled by a phase locked loop responsive to received synchronising pulses and the same control may be applied to the sound channel local oscillator. The control signal for the sound channel local oscillator may be slugged to ensure that any change in the frequency of the oscillator takes place at a subaudible frequency.

A television receiver, according to the present invention, may be arranged to respond to a characteristic other than the number of lines per field of frame of a received television signal and provide internal signal processing appropriate to the components of that television signal as identified by the said other characteristic.

For example, the television receiver may be arranged to respond to the separation between the vision and sound signal frequencies to set the line and field rates to match the transmissions being received. Alternatively, the field synchronising signal frequency could be used as a guide to the transmission standard being received.

The adjustment of internal signal processing to match the transmissions being received may include control of the local colour sub-carrier frequency in a colour television receiver, and may include also, control of the method of colour decoding.

- 5 -

In order that the invention may be fully understood and readily carried into effect, an example of it, arranged to provide internal signal processing appropriate to the video and audio components of a television signal as identified by its number of lines per field of frame, will now be described with reference to the accompanying drawings of which:-

FIGURE 1 is a circuit diagram of a television receiver in accordance with the invention;

FIGURE 2 is a block diagram showing the functional parts of the integrated circuit 9 of Figure 1;

FIGURE 3 is a diagram of a television signal showing the video and sound components relative to their frequencies; and

FIGURE 4 is a diagram to be used to explain the operation of the phase locked loop controlling the frequency of the line oscillator 117 and the sound local oscillator 108 of Figure 2.

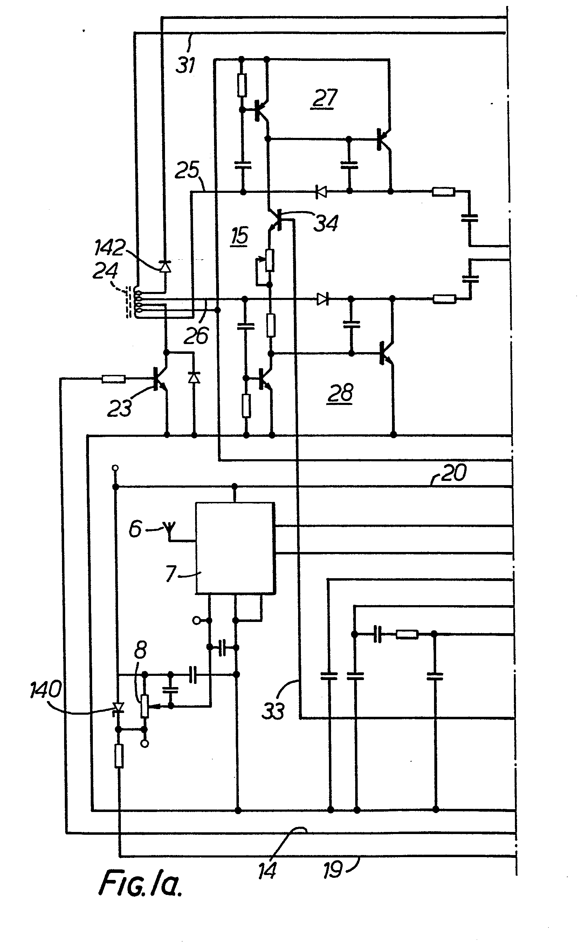

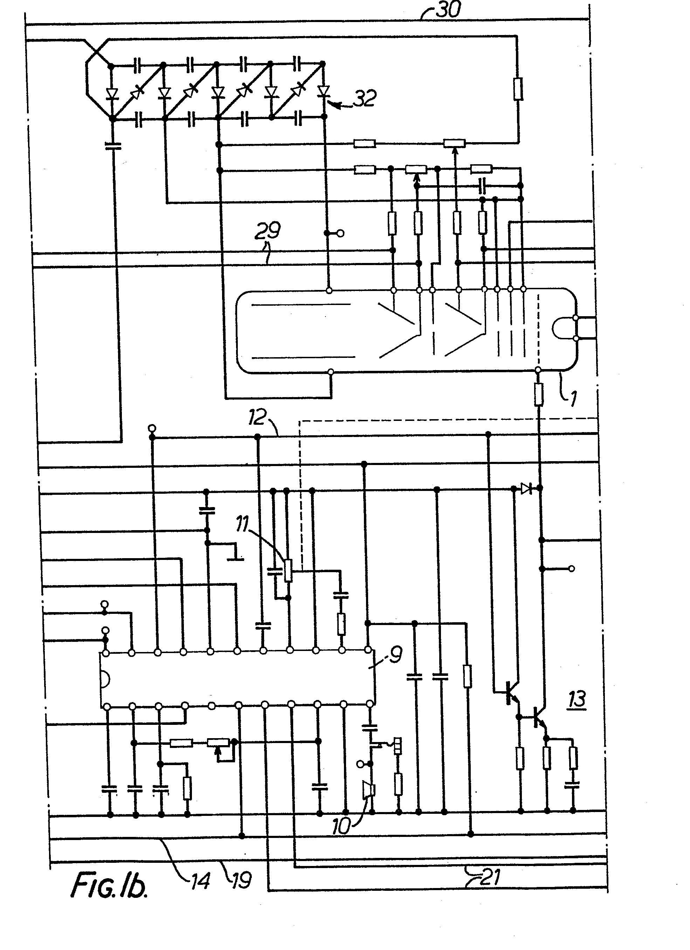

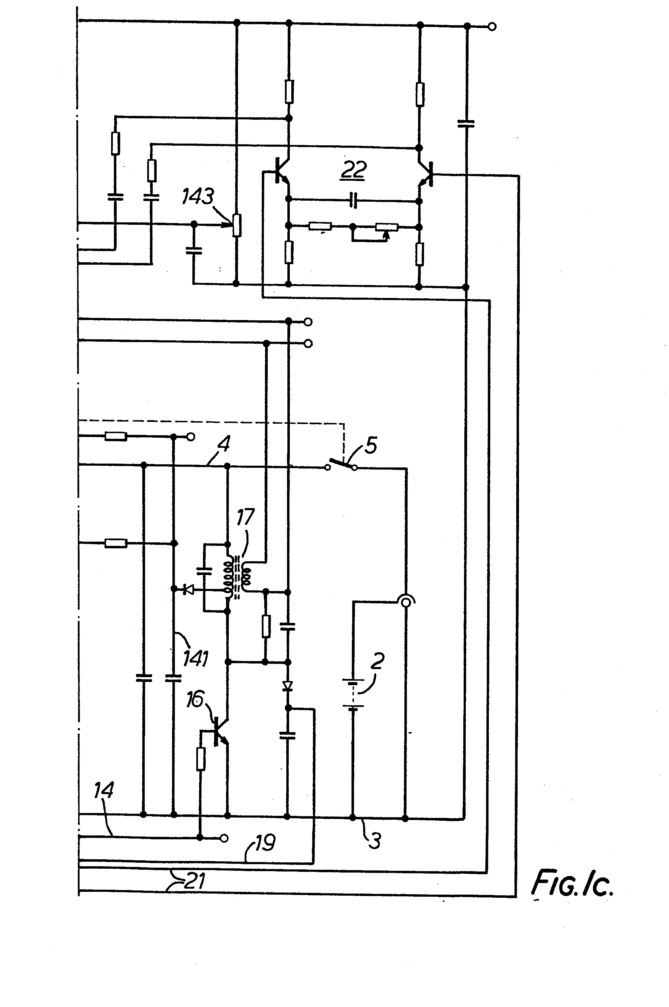

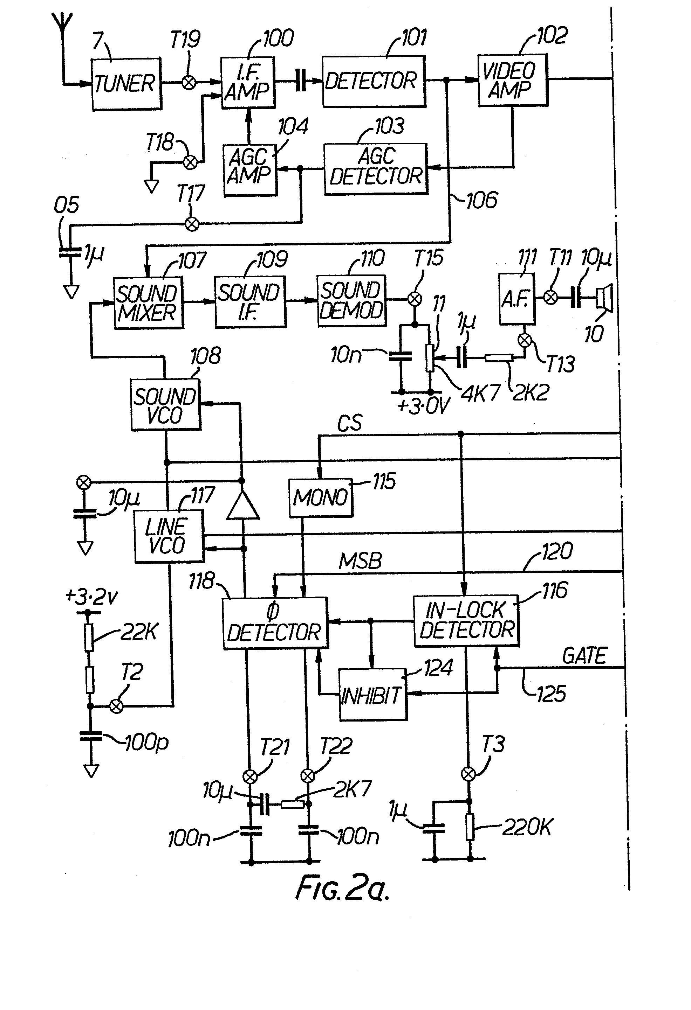

Figure 1 shows the circuit diagram of one example of a television receiver using the invention. The receiver has a flat electrostatically focussed and deflected cathode ray display tube 1 of the type described in British Patent Specification No. 1 592 571. The receiver is powered by a battery 2 providing 6 volts. The battery 2 is connected between an earthed conductor 3 and a supply conductor 4 to which it is connected by an on/off switch 5. The television signals are picked up by an aerial 6 which is connected to a tuner unit 7 which may be of conventional construction. The tuning of the unit 7 is effected by means of one or more varactor diodes to which an adjustable DC voltage is applied from a tuning potentiometer 8. The intermediate frequency output signal from the tuner unit 7 is applied to an integrated circuit 9, the details of which are shown in block diagrammatic form in Figure 2 and which contains the video and sound intermediate frequency signal separation and processing circuits, detector and amplifier stages, together with the sync signal separator and the line and field scanning oscillators. The sound output signal is reproduced by a loudspeaker 10, the volume of which is controlled by a potentiometer 11. The video output signal from the integrated circuit 9 is conveyed by a conductor 12 to a further video amplifier 13 consisting of two transistor stages, the output of which is connected to the grid of the cathode ray tube 1. The line scan signals are applied via a conductor 14 to the line scanning circuit 15 and also to a transistor 16 which operates as a switch to interrupt the DC supply to the primary of a transformer 17 which feeds pulses to produce a 15 volt supply for the video circuits on the line 12. The secondary winding of the transformer 17 supplied the energisation for the heater of the cathode ray tube 1 and this is connected to the collector of the transistor 16 so that the positive-going pulses serve to blank the spot during line flyback. From the collector of the transistor 16 a supply voltage is derived which is established on a conductor 19 and is used to provide the tuning voltage of the tuner 7 via the potentiometer 8. A supply of 3 volts is set up on a supply conductor 20 by a part of the integrated circuit 9 to power the tuner unit 7. The field scan signal for the cathode ray tube 1 is supplied by the integrated circuit 9 via conductors 21 which are connected through a field scan amplifier 22 to the field scan

- 8 -

electrodes of the cathode ray tube 1.

The line scanning circuit 15 receives the line drive signal supplied via the conductor 14 at the base of a transistor 23 which switches current through an autotransformer 24. Two outputs from the autotransformer 24 on conductors 25 and 26 supply similar pulses of opposite polarities to switched integrators 27 and 28 respectively which generate saw-tooth waveforms with flybacks caused by the pulses on the conductors 25 and 26, the saw-tooth waveforms being conveyed via conductors 29 to the line signal deflection electrodes of the cathode ray tube 1. The autotransformer 24 also supplies high voltage pulses along a conductor 30 to supply the field amplifier 22 and further high voltage pulses on a conductor 31 for driving a diode - capacitor stack 32 which generates the various EHT voltages for the cathode ray tube 1. A further output from the integrated circuit 9 is fed along a conductor 33 to control the conductivity of a transistor 34 which determines the slopes of the flanks of the saw-teeth by regulating the current fed to the integrators. This control is required because the cathode ray tube 1 is a flat tube with the screen end on to the electron gun.

Figure 2 shows a block diagram of the circuits contained in the integrated circuit 9 of Figure 1, and in Figure 2 the numbered terminals of the integrated circuit package are preceded by the letter T so that the first terminal is T1 and the last is T22. The output of the tuner 7 (Figure 1) is connected via terminal T19 to an intermediate frequency amplifier 100. The amplified output from the IF amplifier 100 is applied to a detector 101 and from that through a video amplifier 102 to the terminal T16. An AGC signal for the amplifier 100 is derived from the amplifier 102 by an AGC detector 103 from which the AGC signal amplified by amplifier 104 is applied to control the gain of the amplifier 100. A capacitor 105 external to the integrated circuit is connected via terminal T17 to the output of the detector 103 to smooth the gain control voltage. The intercarrier sound is picked off from the output of the video detector 101 and applied via a conductor 106 to a sound channel mixer 107. The oscillation from a local oscillator 108 is mixed with the sound signal from the output of the detector 101 to produce the required intermediate frequency signal which is amplified by IF amplifier 109, the amplified output of which is applied to a demodulator circuit 101 connected to apply the sound output signal to terminal T15. The potentiometer 11 serves as a volume control and regulates the amplitude of the audio signal reapplied to the integrated circuit at terminal T13 for amplification in the AF amplifier 111. The output audio signal is fed via the terminal T11 and a capacitor to the loudspeaker 10.

The video output signal from the amplifier 102 which appears at the terminal T16 is applied as described above with reference to Figure 1 to the grid of the cathode ray display tube 1. It is also reapplied to the integrated circuit via terminal T20 from which it is applied via a DC restoration circuit 112 to a sync separator circuit 113. Pulses at line frequency are conveyed by a conductor 114 to a monostable multivibrator 115 and an IN LOCK detector 116. A picture element frequency oscillator 117 which has its frequency controlled by the output of a phase detector 118 applies pulses to a counter 119 of which the most significant bit output is fed via conductor 120 to an input of the phase detector 118 which compares the time of arrival of the most significant bit with the output of the monostable 115.

0142244

- 11 -

The output of the phase detector 118 also controls the frequency of the local oscillator 108. When operating correctly the frequency of occurrence of the most significant bit signals on the conductor 120 will be at line frequency. The digital output of the counter 119 is applied to a line logic circuit 121, a line digital to analogue converter 122 and a correction digital to analogue converter 123. The line logic circuit 121 produces a gate signal which is applied to the phase detector 118 through an INHIBIT circuit 124 for limiting the time period over which the phase detector 118 is effective near each most significant bit output from the counter 119. The IN LOCK detector circuit 116 compares the timing of the line frequency pulses on the conductor 114 with the gate signals from the line logic circuit 121 on conductor 125 and is connected to the INHIBIT circuit 124 to prevent the gate signals from being applied to the phase detector 118 unless the output of the line counter 119 is substantially synchronised with the signals from the monostable 115. The line logic circuit 121 output on the conductor 125 is also applied to the INHIBIT circuit 124. The line logic circuit 121 produces another output on the conductor 126 which is applied to an EHT INHIBIT circuit 127 connected to terminal T6 of the integrated circuit. This part of the circuit functions to inhibit the generation of pulses at line frequency at the terminal T6 when the voltage of the battery 2 falls below 4.3 volts to prevent the display of a distorted picture. The digital to analogue converter 122 produces line deflection rate controlling waveforms for controlling the integrators 27 and 28 (Figure 1) which generate the line scan waveforms and needed because of the geometry of the cathode ray tube 1. The purpose and operation of the digital to analogue converter 123 will be described later. The line logic circuit 121 also produces signals P1 and P2 identifying the odd and even fields on conductors 128 and 129 which are applied to a field separator circuit 130 which receives the field frequency pulses from the sync separator 113 via a conductor 131. The field sync pulses from the separator 130 are applied via a conductor 132 to a field logic circuit 133 which receives the digital output from a field counter 134 driven by pulses from the counter 119. Blanking signals from the field logic circuit 133 are fed to a switch 135 to ground the terminal T4 and thereby hold the cathode ray tube spot at the left-hand side of the frame during field flyback. The field logic circuit 133 also produces line number standard switch output which is conveyed via a conductor 136 to the oscillators 108 and 117 and to the line and field counters 119 and 134 to enable the receiver to handle different television standards. The digital outputs from the field counter 134 are also applied to a field digital to analogue converter 137 which produces field scan drive signals on terminals T7 and T8. The output of the correction digital to analogue converter 123 is applied as the reference voltage for the converter 137. This correction is needed because the cathode ray tube 1 is a flat tube in which the screen lies end on to the electron gun. It will be appreciated that with a tube of this type if the field deflection voltage is kept constant whilst the line deflection voltage is varied to generate a line, the resulting picture would be trapezoidal in shape. In order to produce a rectangular picture, it is necessary to adjust the field deflection voltage as a line is described by the spot and the purpose of the converter 123 is to cause the field deflection voltage output of the field digital to analogue converter 137 to be adjusted according to the position of the spot along the line so as to produce a rectangular picture. The integrated circuit 9 also includes a 3.2 volt power supply 138 and a 3 volt power supply 139 energised from the main battery supply line 4 via terminal T12. The 3.2 volt supply is connected internally to the EHT INHIBIT circuit 127 and to the terminal T9. The 3 volt supply is connected just to the terminal T14. Earth connections are provided at terminals T5 and T10 and terminals T1, T3, T21 and T22 are provided for the connection of relatively large capacitances to the circuit.

It is not proposed to enter into a detailed description of the generation of the scanning signals and the operation of the circuits directly associated with this because these form the subject of other copending patent applications. The operation of the parts of the integrated circuit is otherwise

- 15 -

fairly conventional for a television receiver,
but where the circuit departs from the usual it
will either be described later on in the present
patent application  or in another co-pending patent
application.

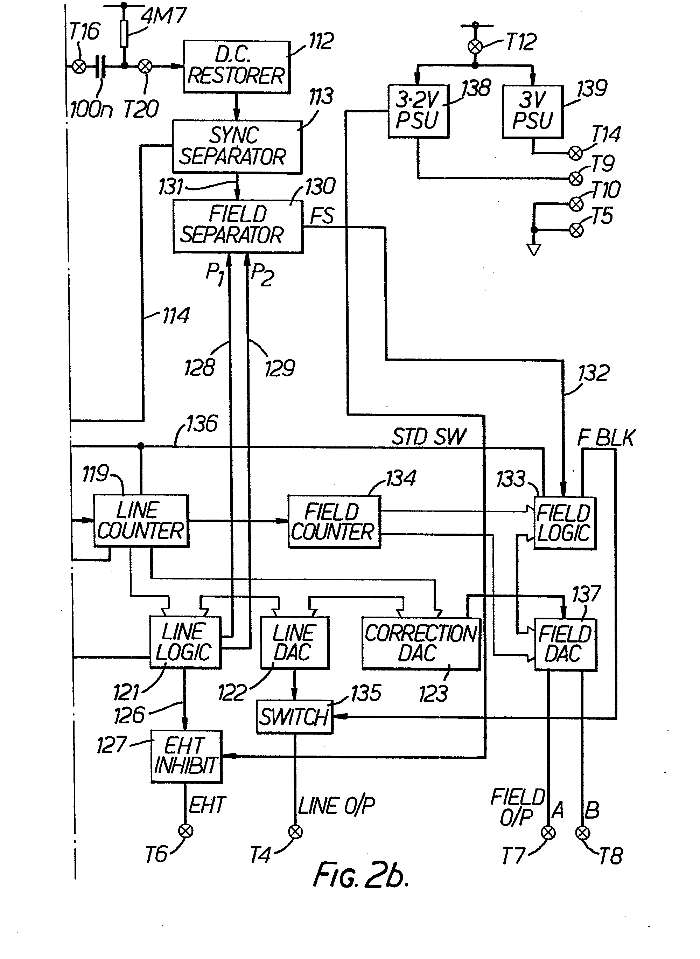

Figure 3 shows a television signal channel of
the most widely used form having a video signal
amplitude modulated on a carrier to give a vestigial
lower sideband 200 and a full upper sideband 201 on
opposite sides of a carrier frequency represented
by a line 202.  Any colour information included
in the signal is disposed within the bandwidth of
the full upper sideband by quadrature amplitude
modulation of a colour subcarrier signal which
is not shown in Figure 3.  The sound signal which
occupies a much smaller bandwidth than the video
component is indicated by the line 203 and is
carried as frequency modulation of a subcarrier
represented by the broken line 204.  The total
bandwidth of the composite signal lies between
the lines A and B and varies from one standard to
another as do the bandwidth of the video component
and the separation of the sound subcarrier 204
from the carrier 202.

By way of example, the UK television channel standard provides for a separation of 6 MHz between the sound subcarrier and the carrier. The European television channel standard calls for a sound subcarrier separation of 5.5 MHz and the American television channel standard has a sound subcarrier separation of 4.5 MHz. Both UK and European standards provide 625 lines per frame and 50 fields per second, whereas the American standard provides 525 lines per frame and 60 fields per second. By virtue of the nature of the television signal, it will be apparent that the bandwidth of the video signal is very similar to, though slightly smaller than, the sound signal separation. The receiver described above with reference to Figures 1 and 2 makes use of this fact by arranging that the frequencies of the line oscillator 117 and the sound local oscillator 108 are substantially the same. They will, however, exhibit slight differences for a reason to be explained later. The frequency of the sound local oscillator 108 will, of course, be offset from the sound signal separation by the intermediate frequency of the sound channel. As is made clear in the description of Figure 2, the frequency of the line oscillator 117 represents a picture element frequency, although it will be apparent from consideration of Figure 3 that the received video signal could not include components of such high frequencies because the video upper sideband is cut off at a lower frequency than that of the sound signal separation.

The line oscillator 117 and the sound local oscillator 108 are switchable to run at frequencies of 5.75 and 4.75 MHz depending on whether the received signal contains 625 or 525 lines per frame. The detection of the number of lines per frame is carried out by the field logic circuit 133 which examines the number of lines counted by the field counter 134 when a field synchronising pulse is received from the field sync signal separator 130 over the conductor 132. It will be apparent that considering the standards described above, both the UK and the European standards provide 625 lines per frame and the sound signal separation is either 5.5 or 6 MHz. In this instance, the number of lines per frame (or field) cannot provide an unambiguous guide to the sound signal separation. However, by using a sound local oscillator having a frequency of 5.75 MHz and a sound IF channel using a frequency of 250 kHz, the sound signal can be received by the receiver because the frequency difference between the received sound channel and the sound local oscillator is 250 kHz in both cases. The choice of the sound local oscillator frequency as 5.75 MHz and the sound frequency as 250 kHz is the subject of a co-pending patent application. There is no such difficulty with the American standard signal, the 4.75 MHz local oscillation producing the 250 kHz IF from the 4.5 MHz sound signal when a frame of 525 lines is received.

The line number standard switch output of the field logic circuit 133 is conveyed by the conductor 136 not only to the line oscillator 117 and the sound local oscillator 108 but also to the line counter 119 and the field counter 134. The signal on the conductor 136 adjusts the line counter 119 to produce output signals on the conductor 120 and to the input of the field counter 134 in accordance with the correct line repetition frequency for the received signal taking into consideration the adjustment of the frequency of the line oscillator. The field counter 134 is adjusted in accordance with the number of lines per field of the received signal.

The frequencies of the line oscillator 117 and the sound local oscillator 108 are controlled by the output of a phase detector 118 in a phase locked loop which includes the line counter 119 from which the most significant bit output is applied via the conductor 120 to the phase detector. The phase detector 118 itself compares the time of start of the most significant bit with the time of occurrence of a pulse of width 2-3 µs produced by the monostable multivibrator 115 in response to the received line synchronising pulses. In order to prevent the phase detector 118 from responding to spurious pulses a gate signal of 7 µs width is generated by the line logic circuit 121 on conductor 125 which is applied via the INHIBIT circuit 124 to permit the detector 118 to compare the times of occurrence of the pulse from the monostable multivibrator 115 with the start of the most significant bit from the line counter 119 for the 7 µs wide period only.

The line oscillator 117 includes an astable multivibrator employing a differential transistor pair with current sources and in which a capacitor links the emitter electrodes of the transistors of the differential pair. The capacitor is provided by two back to back diode capacitors. The current sources control the frequency of the astable multivibrator and frequency control is obtained by controlling the current sources. The astable multivibrator has a first current source providing a preset frequency and a second current source which is linked to the components forming the phase locked loop referred to above. The first current source is derived from a band-gap reference diode by way of a variable resistor which permits external presetting the astable multivibrator to the desired frequency, to permit compensation for the variations which will occur in the total capacitance provided by the diode capacitors in a production run of line oscillators 117.

The sound local oscillator 108 is identical to the line oscillator 117 and includes current sources which are identical to the first and second current sources of the line oscillator 117 and which are linked to the means for controlling the line oscillator 117.

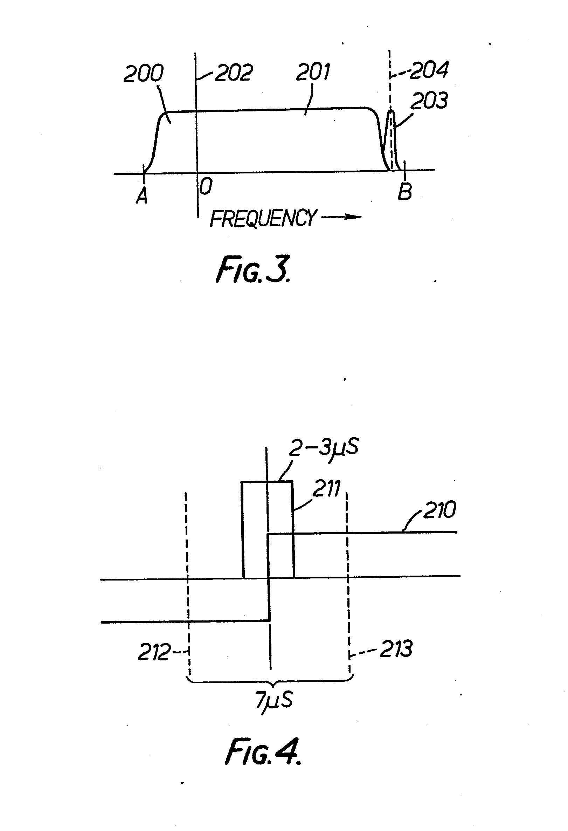

Figure 4 shows the positions of the three signals applied to the phase detector 118 when the phase locked loop is in lock. In Figure 4, the line 210 represents the start of the most significant bit of the line counter 119. 211 represents the 2.3 µs wide pulse from the monostable 115, and the gate signal from the line logic circuit 121 is represented by the interval between the broken lines 212 and 213. It will be apparent to those skilled in the art how such signals can be used by the phase detector 118 to produce voltages for controlling the oscillators 117 and 108.

As explained above, the INHIBIT circuit 124 is provided to disable the gate signal from the line logic circuit 121 when the phase locked loop is not in lock so as to accelerate the rate at which the frequencies of the oscillators 117 and 108 are brought into synchronism with the received line synchronising pulses. The IN LOCK detector 116 is shown as having an input to the phase detector 118 which is used to increase the gain of the phase detector 118 when the loop is locked.

With variation in the received signal path length the timing of the line synchronising pulses can change quite rapidly and this will call for a rapid change in the frequency of the line oscillator 117 to keep the scanning system of the receiver synchronised with the received signal. If the sound local oscillator 108 were to be caused to follow the same rapid changes in frequency, this would result in a sound output being produced at the loudspeaker. In order to avoid this, there is provided a capacitor 220 connected to the terminal T1 of the integrated circuit 9' which is connected to the control signal input of the sound local oscillator 108. In order that the slugging effect of this capacitor shall not interfere with the response of the line oscillator 117, a buffer amplifier 221 is provided to isolate the input of the sound local oscillator from that of the line oscillator.

Although the invention has been described with reference to a simple monochrome television receiver, the invention could also be applied to receivers for colour television signals in which the frequency of the colour subcarrier and indeed the manner of decoding the colour information could be made dependent on the received number of lines per frame.

- 23 -

WHAT WE CLAIM IS:

1.          A television receiver capable of multistandard reception in which a circuit responsive to one characteristic of a received television signal is used to control circuits for setting parts of the receiver to suit at least another characteristic of the received signal.

2.          A receiver according to claim 1 wherein the one characteristic and the other characteristic include the sound channel sub-carrier frequency, the number of lines per field or frame, the field or  frame frequency, colour sub-carrier frequency, method of colour information coding or video signal bandwidth.

3.          A television receiver which is capable of multistandard reception by being arranged to respond to a number of lines per field or frame of a received television signal to provide internal signal processing appropriate to the video and audio components  of that television signal.

4.          A receiver according to claim 3 wherein if the number of lines per frame of the received signal is 525 the field frequency is set to 60 Hz and a sound channel local oscillator is set to suit a sub-carrier frequency of 4.5 MHz, and if the number of lines per frame of the received signal is 625 the field frequency is set to 50 Hz and a sound channel local oscillator is set to suit a sub-carrier frequency of 5.5 or 6.0 MHz.

5. A receiver according to claim 4 wherein the sound channel intermediate frequency is 0.25 MHz so that a sound channel local oscillator frequency of 5.75 MHz can be used for a sound channel sub-carrier frequency of 5.5 or 6.0 MHz.

6. A receiver according to any preceding claim including an oscillator emitting pulses at a picture element frequency, a line counter responsive to the pulses to produce signals at line frequency and a field counter responsive to the line frequency signals to produce signals at field frequency, wherein the line and field counters are adjusted to suit the characteristics of the received signal.

7. A receiver according to claim 6 wherein the sound channel local oscillator and the picture element frequency oscillator oscillate at substantially the same frequency.

8. A receiver according to claim 7 wherein the picture element frequency oscillator and the sound channel local oscillator are controlled in frequency by a phase locked loop responsive to received line synchronising pulses.

9.      A receiver according to claim 8 wherein the control of the sound channel local oscillator from the phase locked loop is slugged to ensure that any change in the frequency of that oscillator takes place at a  sub-audible frequency.

10.      A television receiver according to claim 8 or 9 wherein the phase locked loop includes a phase detector and an "in lock" detector responsive to the timing of a received line synchronising pulse relative to the count in the line counter to produce an output indicating that the circuit is "in lock", which output is applied to the phase detector to increase the gain thereof.

11.      A television receiver in which the scanning raster is generated in response to outputs from a digital counter counting pulses from picture element frequency oscillator, wherein the picture element frequency oscillator operates at substantially the same frequency as the sound signal local oscillator of the receiver.

12.      A receiver according to claim 11 including a phase comparator connected to control the frequency of the picture element frequency oscillator with reference to the relative timing of a received line synchronising pulse and an output from the digital counter.

13.      A receiver according to claim 12 wherein the frequency of the sound signal local oscillator is also controlled by the phase comparator, the output of the  comparator which is connected to the sound signal local oscillator being capacitively loaded to block control signals from the oscillator which might otherwise cause an audible output to be produced.

14.      A receiver according to any of claims 11 to 13 arranged for receiving television signals according to a plurality of different standards wherein the oscillators are switchable to different frequencies and the digital counter is switchable to suit different line frequencies.

Fig. la.

Fig. 1b.

143

22

4

5

17

141

16

14

19

2

3

21

Fig.Ic.

0142244

FIG.2a.

0142244

FIG. 2b.

200   202   201   ⌐204
                    203

A    0              B

FREQUENCY ⟶

FIG. 3.

2-3μS
        211       210
212                 213

7μS

FIG. 4.

0142244

European Patent Office

EUROPEAN SEARCH REPORT

. Application number

## DOCUMENTS CONSIDERED TO BE RELEVANT

EP 84306295.1

| Category | Citation of document with indication, where appropriate, of relevant passages | Relevant to claim | CLASSIFICATION OF THE APPLICATION (Int Cl 4) |
|---|---|---|---|
| X | DE - A - 1 437 629 (COMPAGNIE FRANCAISE) <br><br> * Page 15, claim 1 * <br> -- | 1,3 | H 04 N 5/46 |
| A | DE - A1 - 2 435 857 (PHILIPS) <br><br> * Page 8, last paragraph * <br> -- | 2 | |
| A | DE - A - 2 319 443 (ATELIERS DE CONSTRUCTIONS) | 2 | |
| X | * Page 9, claim 3 * <br> -- | 3 | |
| A | US - A - 4 365 270 (RUTISHAUSER) <br><br> * Abstract * <br> -- | 2 | |
| A | DE - A1 - 2 616 694 (GRAETZ) <br><br> * Page 1, claim 1; page 2, lines 4-22 * <br> -- | 2 | TECHNICAL FIELDS SEARCHED (Int. Cl.4) <br><br> H 04 N 3/00 |
| A | DE - A1 - 3 017 760 (LICENTIA) <br><br> * Page 3, lines 1-11 * <br> -- | 4,8,10 | H 04 N 5/00 <br> H 04 N 11/00 |
| A | DE - A - 2 342 620 (THORN) <br><br> * Page 3, lines 4-10 * <br> -- | 4 | |
| A | DE - B - 1 150 113 (FERNSEH GMBH) <br><br> * Column 1, lines 23-33 * <br> -- | 4 | |

The present search report has been drawn up for all claims

| Place of search <br> VIENNA | Date of completion of the search <br> 06-12-1984 | Examiner <br> BENISCHKA |
|---|---|---|

EPO Form 1503 03 82

**European Patent Office**

**EUROPEAN SEARCH REPORT**

0142244
.Application number

| | DOCUMENTS CONSIDERED TO BE RELEVANT | | EP 84306295.1 |
|---|---|---|---|

| Category | Citation of document with indication. where appropriate, of relevant passages | Relevant to claim | CLASSIFICATION OF THE APPLICATION (Int. Cl.4) |
|---|---|---|---|
| A | <u>US - A - 3 430 067</u> (BAUM) <br> * Fig. 1 * <br><br> -- | 6 | |
| A | <u>GB - A - 1 020 008</u> (INTERNATIONAL BUSINESS MACHINES CORP.) <br><br> * Fig. 1; page 1, lines 69-86 * <br><br> -- | 11 | |
| A | <u>US - A - 4 092 672</u> (ASCHWANDEN) <br> * Fig. 1; abstract * <br><br> ---- | 8,10, 12 | |
| | | | **TECHNICAL FIELDS SEARCHED (Int. Cl.4)** |

The present search report has been drawn up for all claims

| Place of search | Date of completion of the search | Examiner |
|---|---|---|
| VIENNA | 06-12-1984 | BENISCHKA |